# EUROPEAN PATENT SPECIFICATION

(11) **EP 1 227 613 B1**
(45) Date of publication and mention of the grant of the patent: **25.04.2007**
(21) Application number: 02001120.1
(22) Date of filing: 24.01.2002
(51) Int. Cl.: H04L 9/32

(54) **Method and apparatus for attaching electronic signature to document having structure**
Verfahren und Vorrichtung zum Anfügen einer elektronischen Unterschrift an ein strukturiertes Dokument
Procédé et dispositif pour rattacher une signature électronique à un document structuré

(30) Priority: 24.01.2001 JP 2001016155
(43) Date of publication of application: 31.07.2002
(73) Proprietor: K-Plex Inc., San Jose, CA 95134 (US)
(72) Inventor: Teruuchi, Tomoru, San Jose, CA 95134 (US); Oikawa, Kazushige, San Jose, CA 95134 (US)
(74) Representative: HOFFMANN EITLE

(56) References cited:
- EP-A- 0 586 022
- EP-A- 0 781 003
- EP-A- 0 798 892
- US-A- 5 915 024
- BRIN S; DAVIS J; GARCIA-MOLINA H : "COPY DETECTION MECHANISMS FOR DIGITAL DOCUMENTS" SIGMOD RECORD, ASSOCIATION FOR COMPUTING MACHINERY, vol. 24, no. 2, 1 June 1995 (1995-06-01), pages 398-409, XP000527686 New York

## Description

The present invention relates generally to electronic signature (digital signature) technology utilized to ensure authenticity of an electronic file, and more particularly, to electronic signature technology applied to an electronic file which contains a document having a structure.

Electronic signature technology utilizes public key cryptosystem to certify that the contents of an electronic file have not been modified after an electronic signature was attached to the file. More specifically, for example, an electronic file or its digest is encrypted by a sender's private key, and its encrypted value is sent together with the original electronic file to a recipient, who decrypts the encrypted value by the sender's public key to see that the decrypted value is equal to the original electronic file or its digest, whereby it is certified that the contents of the original electronic file have net been modified.
US Patent A-5 915 024 discloses means for detecting possible alteration to a document by applying a signature to the document. The signature is based on the content of each of a plurality of divided parcels of document data. The parcels are defined in their boundaries by predetermined printable characters appearing in the document. The signature is attached to the document prior to transmission or storage of the document. Verification of the document is achieved by regenerating and comparing the signature for each divided parcel of document data.

Although the aforementioned conventional electronic signature technology can verify content equivalence between an electronic file and its encrypted electronic file, it cannot be used to verify document structure equivalence between files when the files contain a document having a structure.

Therefore, where there is document structure equivalence between electronic files although the electronic files are not equivalent to each other in terms of contents, the conventional technology can only verify that the contents of the electronic files do not match.

Further, as the conventional technology can describe only two kinds of states, i.e., equivalent or not equivalent, there is no way of knowing exactly which part of a document structure is different between files and how different they are, etc. when it transpires that the files are not equivalent.

In view of the situation as mentioned above, it is an object of the present invention to provide electronic signature technology to be applied to an electronic file containing a document having a structure, according to which a level of equivalence such as electronic file equivalence, document structure equivalence, document structure partial equivalence, etc. can be evaluated.

To achieve the above object, the present invention provides a method and apparatus for attaching an electronic signature to an electronic file containing a document having a structure, wherein a signature is generated from each structural element of a target document.

According to the electronic signature method of the present invention, first, a target document having a structure is analyzed to generate a representation using structural elements and then, a signature (encrypted structural element) is generated from each of structural elements of the generated representation and the thus generated signatures (ciphers) are concatenated to form a single signature corresponding to the structure of the document. A method of encrypting each structural element does not have to be limited to any particular method, and any common cipher generation method may be employed.

Further, according to the electronic signature method of the present invention, an electronic file with a generated electronic signature is verified and depending on a processing request, at least (1) electronic file equivalence, (2) document structure equivalence and (3) a coincidence rate between electronic files are found from the contents of the signature.

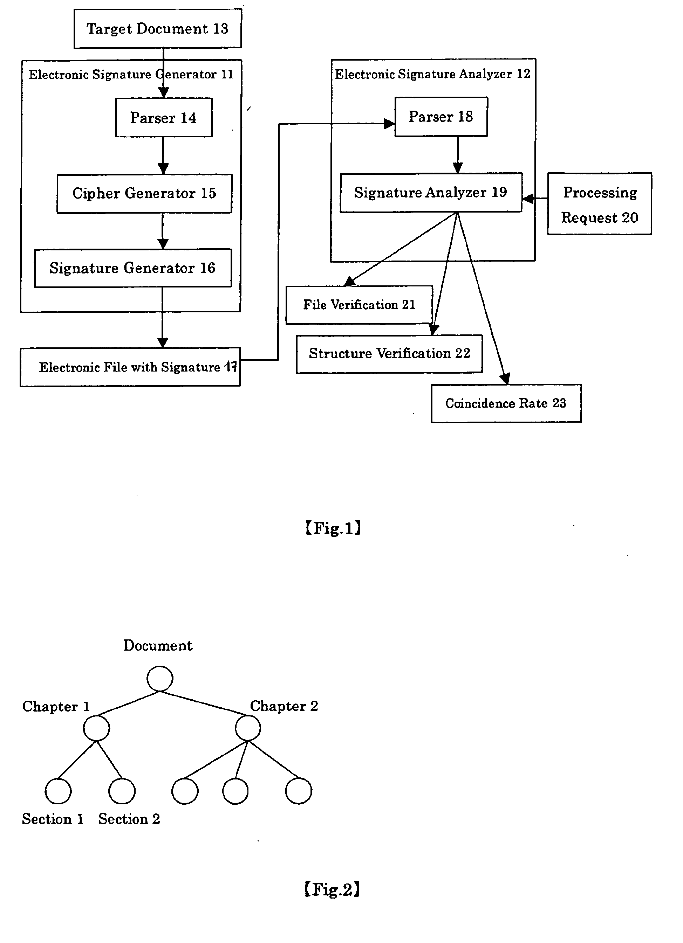

The electronic signature apparatus according to the present invention comprises electronic signature generator 11 and electronic signature analyzer 12, as illustrated in Fig. 1. The electronic signature generator 11 comprises parser unit 14 for analyzing target document having a structure 13 to generate a representation using structural elements; cipher generator unit 15 for generating a signature from each of structural elements generated by the parser unit 14; and signature generator unit 16 for concatenating the generated signatures (ciphers) into a single signature corresponding to the structure of the document.

The electronic signature analyzer 12 similarly comprises parser unit 18 and signature analyzer unit 19 in order to verify electronic file 17 having a generated electronic signature. The signature analyzer unit 19 has at least three functions to perform in response to a request for processing, i.e. (1) function 21 of verifying electronic file equivalence ; (2) function 22 of verifying document structure equivalence ; and (3) function 23 of deriving a coincidence rate.
Fig. 1 is a conceptual diagram illustrating an electronic signature apparatus and the flow of process performed thereby;
Fig. 2 is a diagram illustrating a tree structure of a document;
Fig. 3 is a diagram showing an example of a structure of an XML file;
Fig. 4 is a diagram showing an example of a structure of a file which is equivalent to the structure of file shown in Fig. 3 in terms of XML although they are different files;
Fig. 5 is a diagram showing a document and a cipher corresponding to each structural element of the document;
Fig. 6 is a diagram showing an example of a format for concatenating electronic signatures (ciphers);
Fig. 7 is a diagram showing an XML file to which an electronic signature is attached;
Fig. 8 is a block diagram illustrating an example of a configuration of a system in which the present invention is reduced to practice;
Fig. 9 is a block diagram illustrating an example of a system configuration of an application example of the present invention;
Fig. 10 is a diagram showing an example of a configuration.xml file to which an electronic signature is added;
Fig. 11 is a diagram showing an example of modification to a configuration.xml file; and
Fig. 12 is a diagram showing another example of modification to a configuration.xml file.

First, reference is made to a "document having a structure", which constitutes a subject of a method and apparatus of the present invention. A normal document consists of chapters, sections and paragraphs, which may be diagrammatically represented as a tree structure as illustrated in Fig. 2. The electronic signature method and apparatus according to the present invention are directed to an electronic file containing a document that can be represented in the form of such a tree structure.

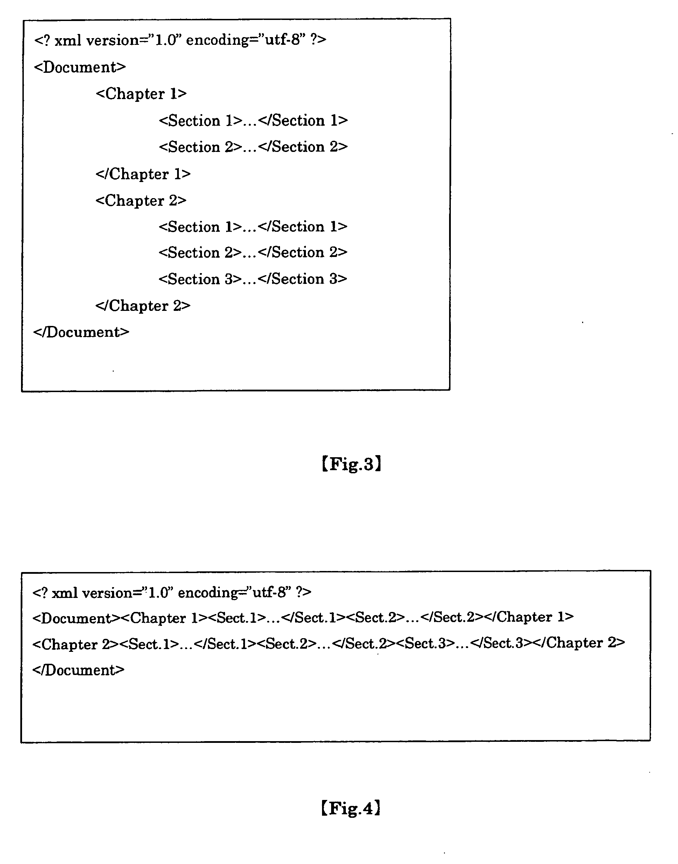

A file described in XML may be cited as an example of a document having such a tree structure. An example of an XML file is shown in Fig. 3.

In the shown example, the XML file contains information called "white space", that is, information about tab, line feed, etc. to represent indentation. Since XML permits the use of a white space in so far as the white space does not change a document structure, deletion of such information from this XML file does not affect its document structure per se. Fig. 4 shows the XML file with the white spaces being deleted, which is the same as the XML file shown in Fig. 3 in terms of a document structure. However, when these files in Figs. 3 and 4 are compared to each other simply as files, they are considered to be different.

Conventionally, whether or not two XML files are equivalent in terms of a document structure has been judged by analyzing them by means of an XML Parser, generating the result of the analysis in the form of DOM objects and comparing the thus generated DOM objects to see if they are equivalent. On the other hand, according to the electronic signature method and apparatus of the present invention, the files in Figs. 3 and 4 have different signature codes representing a file although they have the same signature codes representing a document structure. Thus, by employing the present method and apparatus, it is possible to learn from the signature codes that these files are different in file contents and yet equivalent in terms of a document structure.

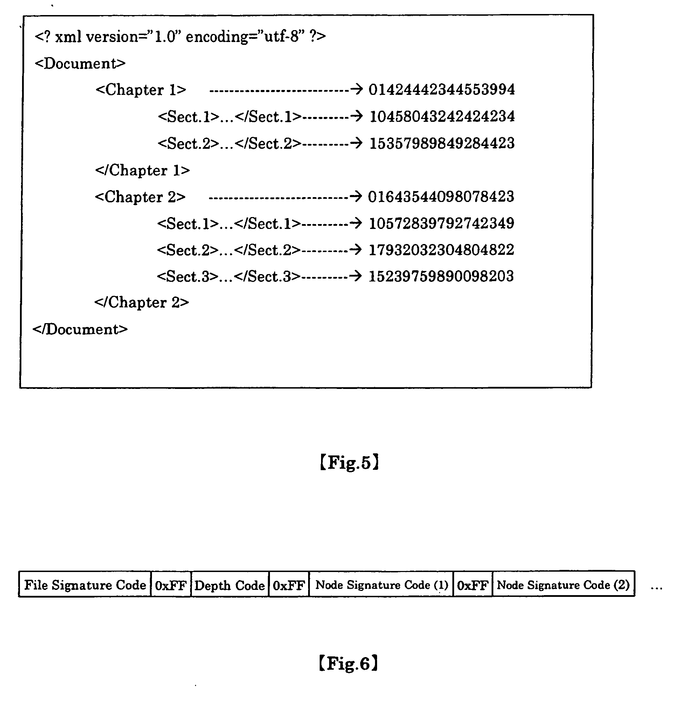

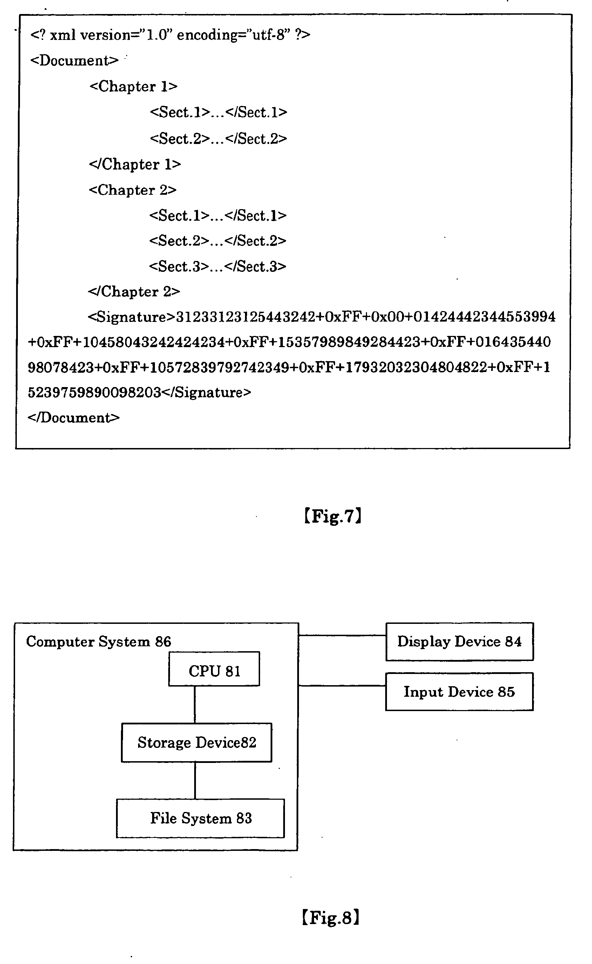

Fig. 5 shows an example of a signature of the aforementioned file and document structure. It is assumed here that Fig. 5 shows a result obtained by enciphering each structure element to be mapped to seventeen-digit decimal numerals. Next, a signature is generated based on the enciphered information. Fig. 6 shows a format for concatenating signatures (ciphers) to one another. In Fig. 6, a file signature code is a cipher indicative of coincidence in terms of a file, and "0xFF" is a delimiter for limiting a string of elements. Further, a depth code is a numerical value indicative of how much of a tree structure is ciphered to be contained in a signature. More specifically, when a depth code is 0, it signifies that ciphers to represent all the structural elements of a tree structure are included in a signature. By enabling this code to be set, precision of reliability judgment of a document with an electronic signature can be varied depending on the level of depth. A node signature code is a cipher of each element. By adding the thus constructed signature to the file as a structure element of the document, a document with an electronic signature shown in Fig. 7 is obtained. In the example shown in Fig. 7, a signature node, i.e.<Signature> ... </Signature> is added, and a symbol "+" is used to concatenate character strings for the sake of clarity of a construction of a signature, and the thus concatenated character strings constitute a signature.

The electronic signature apparatus according to the present invention may be built on a computer system 86 which comprises a CPU 81, a storage device 82, a file system 83, a display device 84 and an input device 85, as illustrated in Fig. 8. In the file system 83, documents having electric signature as their data are stored/managed. Since the location of each document is not relevant to the substance of the present example, data may be placed in a database.

In the system configuration as illustrated above, the electronic signature method and apparatus according to the present invention can treat a file stored in the file system 83 as a document having a structure and verify whether an unauthorized modification has been made to the file and which portion of the structure has been modified if it transpires that there has been an unauthorized modification.

As a specific example of the aforementioned verification, reference is now made to an application example where an unauthorized operation of a system is prevented by verifying which portion of a file has been modified.

According to the application example, a tool for automatically generating a configuration for accessing a database system generates a configuration file containing an electronic signature, whereby a user is notified of an unauthorized modification on the file and the location of the unauthorized modification before access to the database system.

Conventionally, a configuration file, which is automatically generated by a tool for automatically generating a configuration for accessing a database system, does not support a modification made to a file by means of a method other than the tool. Usually, information indicative of whether or not a modification has been made to a file by a method other than the tool is not attached to a file. Besides, even if a conventional electronic signature is attached to such a configuration file, it can only show that a file has been modified and which portion of the file has been modified cannot be identified. Still further, as a conventional electronic signature can only verify that a file has been modified, even if the modification does not disadvantageously affect an operation in the light of structural information, it is still indicated by the signature that the modification has been unauthorized. Thus, processing performed by a conventional electronic signature is not adequate or thorough.

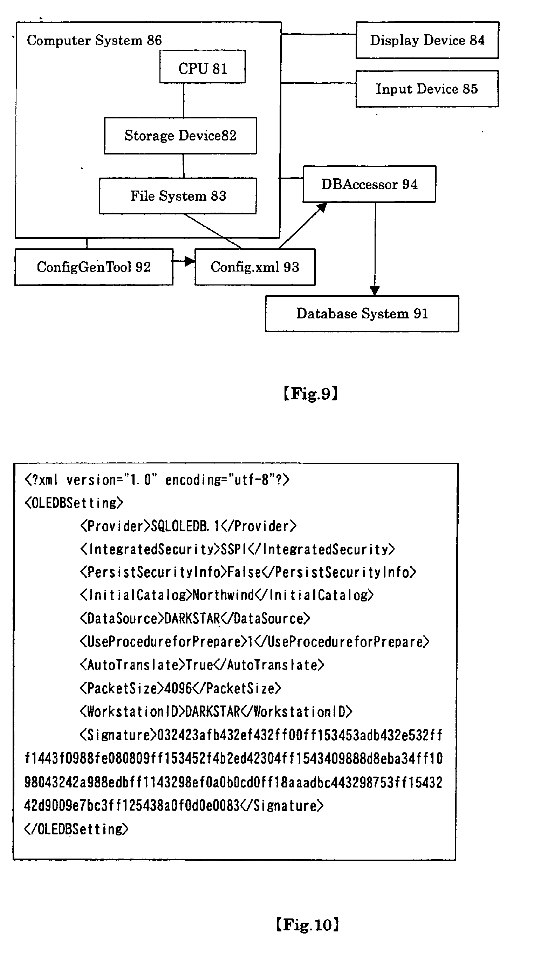

Fig. 9 illustrates a system configuration of the above-described application example. Since the system illustrated in Fig. 9 comprises the system shown in Fig. 8 and database system 91, like numerals denote like components in Figs. 8 and 9. In order for the computer system 86 to access the database system 91, an appropriate configuration must be provided. The system in Fig. 9 is provided with a tool (ConfigGenTool) 92 for automatically generating such a configuration by interacting with a user. The tool 92 requests a user to enter information necessary for accessing the database system and generates a configuration file on the basis of the thus input information. More specifically, the tool 92 verifies that the computer system can access the database system 91 by the configuration and generates a configuration file (Config.xml) 93. At the time of generation of the configuration file 93, a user can indicate whether or not to add an electronic signature of the present invention to the configuration file 93 and also choose a depth code of the electronic signature which affects how extensively and strictly a structure of the file is to be covered by the electronic signature. Fig. 10 shows an example of the configuration file 93 to which an electronic signature is attached. In the example shown in Fig. 10, a signature of each structural element of a file and a signature of the file per se are both represented in seventeen-digit hexadecimal numbers.

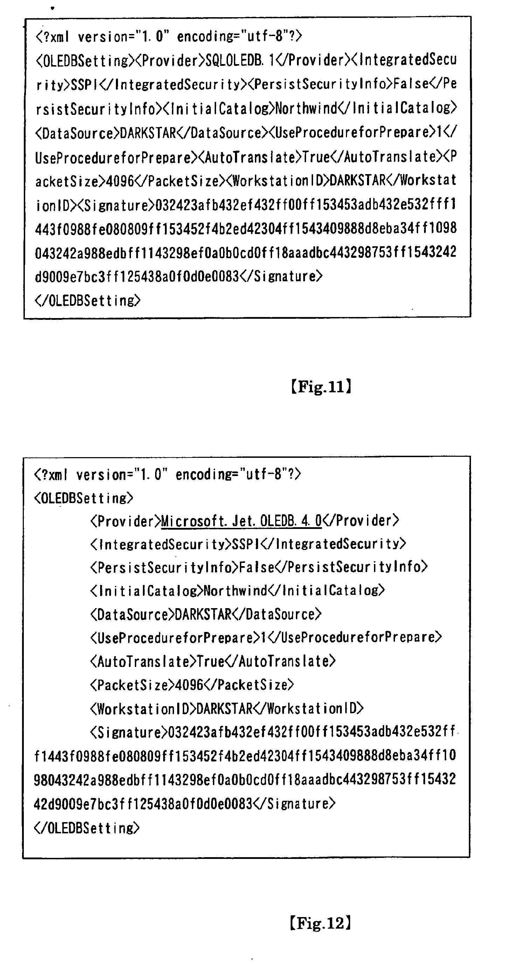

The thus generated configuration file 93 is referenced by a database system access module (DBAccessor) 94, which is activated when the computer system actually accesses the database system 91. In this event, when an electronic signature is included in the configuration file 93, the module 94 verifies its authenticity before it accesses the database system 91. When the configuration file 93 has been modified as shown in Fig. 11, the module 94 performs normal database access processing because the file of Fig. 11 coincides with the original file of Fig. 10 in terms of a structure, though the file of Fig. 11 is considered to be unauthorized in terms of a file coincidence, i.e. the files in Figs. 10 and 11 do not match. In other words, since the modification of the file in Fig. 10 to the file in Fig. 11 constitutes mere deletion of tabs and line feed codes, which are white spaces according to the XML specification, the files in Figs. 10 and 11 are equivalent in terms of XML.

On the other hand, when the configuration file 93 has been modified as indicated by the underline in Fig. 12, the module 94 can identify the modified portion in the file in Fig. 12 which does not coincide with the corresponding portion in the original file in Fig. 10 and notify a user by displaying a message "The designated provider is not authorized", before starting access processing. Thus, by using an electronic signature of the present invention in a configuration file for accessing a database system, a portion that has become unauthorized as a result of modification can be specifically indicated, whereby an unauthorized access can be avoided.

Further, the use of the electronic signature method and apparatus of the present invention enables determination as to whether each of structural elements of an electronic file containing a document having the above-described structure coincides with that of the original electronic file, whereby a coincidence rate or non-coincidence rate with respect to an entire structure as opposed to each structural element can be calculated and the system can be controlled with reference to the thus calculated rate.

As appreciated from the foregoing, according to the present electronic signature method and apparatus, electronic signatures can be extracted and compared, so that it becomes possible to verify equivalence between electronic files containing a document having a structure such as file equivalence and document structure equivalence and also find a coincidence rate between files.

## Claims

1. An electronic signature method comprising the steps of:
analyzing (14) a target document (13) to generate a representation having a structure;
generating (15) an electronic signature from each structural element of the structure of the generated representation; and concatenating (16) the generated electronic signatures into a single signature corresponding to the structure of the generated representation;
**characterized in that** a rate of coincidence (23) between the target document (13) and the target document with an electronic signature (17) is found from a rate of structural elements having authenticated electronic signatures to the whole structure.

2. An electronic signature method according to claim 1, further comprising the step of setting a level of attachment of electronic signatures to structural elements of the document, whereby precision of reliability judgment of a document with an electronic signature can be varied depending on the level.

3. A method according to claim 1 or 2, wherein said concatenating step (16) includes putting the generated electronic signatures in a row.

4. An electronic signature apparatus comprising:
means for analyzing a target document (14) to generate a representation having a structure;
means for generating an electronic signature (15) from each structural element of the structure of the generated representation; and
means for concatenating the generated electronic signatures (16) into a single signature corresponding to the structure of the generated representation;
**characterized in that** means for analyzing the electronic signature (12) determines a rate of coincidence (23) between the target document (13) and the target document with an electrical signature (17) from a rate of structural elements having authenticated electronic signatures to the whole structure.

5. An electronic signature apparatus according to claim 4, wherein a level of attachment of electronic signatures to structural elements of the document can be set by said means for generating an electronic signature (15) whereby precision of reliability judgment of a document with an electronic signature (17) can be varied depending on the level.

6. An electronic signature apparatus according to claim 4 or 5, wherein said means for concatenating (16) puts the generated electronic signatures in a row.

7. An electronic signature apparatus according to claim 4, 5 or 6, further comprising:
means for analyzing the structure of the target document (12, 18, 19) to verify the target document having the generated electronic signature; and
means for analyzing each of the electronic signatures (19, 22) of the structural elements of the target document.

8. An electronic signature apparatus comprising:
an electronic signature generator (11) including :
means for analyzing a target document (14) to generate a representation having a structure;
means for generating an electronic signature from each structural element (15) of the structure of the generated representation; and
means for concatenating the generated electronic signature (16) into a single signature corresponding to the structure of the generated representation; and
an electronic signature analyzer (12) including:
means for analyzing a structure (18) of the target document (13) having the electronic signature; and
means for analyzing the added electronic signature (19) **characterized in that** said means for analyzing the electronic signature (19) determines a rate of coincidence (23) between the target document (13) and the target document with an electrical signature (17) from a rate of structural elements having authenticated electronic signatures to the whole structure.

## Patentansprüche

1. Verfahren für eine elektronische Signatur, mit den Schritten zum:
Analysieren (14) eines Zieldokumentes (13) zum Erzeugen einer Darstellung mit einer Struktur;
Erzeugen (15) einer elektronischen Signatur aus jedem strukturellen Element der Struktur der erzeugten Darstellung; und
Verketten (16) der erzeugten elektronischen Signaturen zu einer einzelnen Signatur, die der Struktur der erzeugten Darstellung entspricht;
**dadurch gekennzeichnet, dass**
eine Rate einer Koinzidenz (23) zwischen dem Zieldokument (13) und dem Zieldokument mit einer elektronischen Signatur (17) aus einer Rate von strukturellen Elementen mit authentifizierten elektronischen Signaturen zu der gesamten Struktur gefunden wird.

2. Verfahren für eine elektronische Signatur gemäß Anspruch 1, ferner den Schritt umfassend zum Festlegen eines Grades einer Anfügung elektronischer Signaturen an strukturelle Elemente des Dokumentes, wobei eine Genauigkeit einer Zuverlässigkeitsbeurteilung eines Dokumentes mit einer elektronischen Signatur in Abhängigkeit von dem Grad variiert werden kann.

3. Verfahren für eine elektronische Signatur gemäß Anspruch 1 oder 2, wobei der Verkettungsschritt (16) ein Unterbringen der erzeugten elektronischen Signaturen in einer Reihe enthält.

4. Vorrichtung für eine elektronische Signatur, mit:
einer Einrichtung zum Analysieren eines Zieldokumentes (14) zum Erzeugen einer Darstellung mit einer Struktur;
einer Einrichtung zum Erzeugen einer elektronischen Signatur (15) aus jedem strukturellen Element der Struktur der erzeugten Darstellung; und
einer Einrichtung zum Verketten der erzeugten elektronischen Signaturen (16) zu einer einzelnen Signatur, die der Struktur der erzeugten Darstellung entspricht;
**dadurch gekennzeichnet, dass**
eine Einrichtung zum Analysieren der elektronischen Signatur (12) eine Rate einer Koinzidenz (23) zwischen dem Zieldokument (13) und dem Zieldokument mit einer elektronischen Signatur (17) aus einer Rate von strukturellen Elementen mit authentifizierten elektronischen Signaturen zu der gesamten Struktur bestimmt.

5. Vorrichtung für eine elektronische Signatur gemäß Anspruch 4, wobei ein Grad einer Anfügens elektronischer Signaturen an strukturelle Elemente des Dokumentes mittels der Einrichtung zum Erzeugen einer elektronischen Signatur (15) festgelegt sein kann, wobei eine Genauigkeit einer Zuverlässigkeitsbeurteilung eines Dokumentes mit einer elektronischen Signatur (17) in Abhängigkeit von dem Grad variiert werden kann.

6. Vorrichtung für eine elektronische Signatur gemäß Anspruch 4 oder 5, wobei die Einrichtung zum Verketten (16) die erzeugten elektronischen Signaturen in einer Reihe unterbringt.

7. Vorrichtung für eine elektronische Signatur gemäß Anspruch 4, 5 oder 6, ferner mit:
einer Einrichtung zum Analysieren der Struktur des Zieldokumentes (12, 18, 19) zum Verifizieren des Zieldokumentes mit der erzeugten elektronischen Signatur; und
einer Einrichtung zum Analysieren jeder der elektronischen Signaturen (19, 22) der strukturellen Elemente des Zieldokumentes.

8. Vorrichtung für eine elektronische Signatur, umfassend:
einen Generator für eine elektronische Signatur (11), mit:
einer Einrichtung zum Analysieren eines Zieldokumentes (14) zum Erzeugen einer Darstellung mit einer Struktur;
einer Einrichtung zum Erzeugen einer elektronischen Signatur aus jedem strukturellen Element (15) der Struktur der erzeugten Darstellung; und
einer Einrichtung zum Verketten der erzeugten elektronischen Signatur (16) zu einer einzelnen Signatur, die der Struktur der erzeugten Darstellung entspricht; und
einen Analysator für eine elektronische Signatur (12), mit:
einer Einrichtung zum Analysieren einer Struktur (18) des Zieldokumentes (13) mit der elektronischen Signatur; und
einer Einrichtung zum Analysieren der hinzugefügten elektronischen Signatur (19),
**dadurch gekennzeichnet, dass**
die Einrichtung zum Analysieren der elektronischen Signatur (19) eine Rate einer Koinzidenz (23) zwischen dem Zieldokument (13) und dem Zieldokument mit einer elektronischen Signatur (17) aus einer Rate von strukturellen Elementen mit authentifizierten elektronischen Signaturen zu der gesamten Struktur bestimmt.

## Revendications

1. Procédé de signature numérique comprenant les étapes consistant à :
analyser (14) un document cible (13) pour générer une représentation ayant une structure ;
générer (15) une signature numérique à partir de chaque élément structurel de la structure de la représentation générée ; et concaténer (16) les signatures numériques générées en une seule signature correspondant à la structure de la représentation générée ;
**caractérisé en ce qu'**un taux de coïncidence (23) entre le document cible (13) et le document cible avec une signature numérique (17) est trouvé à partir d'un taux d'éléments structurels ayant des signatures numériques authentifiées par rapport à la structure tout entière.

2. Procédé de signature numérique selon la revendication 1, comprenant en outre l'étape consistant à fixer un niveau d'attachement de signatures numériques aux éléments structurels du document, moyennant quoi on peut faire varier la précision du jugement de fiabilité d'un document avec une signature numérique en fonction du niveau.

3. Procédé selon la revendication 1 ou 2, dans lequel ladite étape de concaténation (16) comprend le fait de mettre en rang les signatures numériques générées.

4. Appareil de signature numérique comprenant :
un moyen destiné à analyser un document cible (14) pour générer une représentation ayant une structure ;
un moyen destiné à générer une signature numérique (15) à partir de chaque élément structurel de la structure de la représentation générée ; et
un moyen destiné à concaténer les signatures numériques générées (16) en une seule signature correspondant à la structure de la représentation générée ;
**caractérisé en ce qu'**un moyen destiné à analyser la signature numérique (12) détermine un taux de coïncidence (23) entre le document cible (13) et le document cible avec une signature numérique (17) à partir d'un taux d'éléments structurels ayant des signatures numériques authentifiées par rapport à la structure tout entière.

5. Appareil de signature numérique selon la revendication 4, dans lequel un niveau d'attachement de signatures numériques aux éléments structurels du document peut être fixé par ledit moyen destiné à générer une signature numérique (15), moyennant quoi on peut faire varier la précision du jugement de fiabilité d'un document avec une signature numérique (17) en fonction du niveau.

6. Appareil de signature numérique selon la revendication 4 ou 5, dans lequel ledit moyen destiné à concaténer (16) met en rang les signatures numériques générées.

7. Appareil de signature numérique selon la revendication 4, 5 ou 6, comprenant en outre :
des moyens destinés à analyser la structure du document cible (12, 18, 19) pour vérifier le document cible ayant la signature numérique générée ; et
des moyens destinés à analyser chacune des signatures numériques (19, 22) des éléments structurels du document cible.

8. Appareil de signature numérique comprenant :
un générateur de signature numérique (11) comprenant :
un moyen destiné à analyser un document cible (14) pour générer une représentation ayant une structure;
un moyen destiné à générer une signature numérique à partir de chaque élément structurel (15) de la structure de la représentation générée ; et
un moyen destiné à concaténer la signature numérique générée (16) en une seule signature correspondant à la structure de la représentation générée ; et
un analyseur de signature numérique (12) comprenant:
un moyen destiné à analyser une structure (18) du document cible (13) ayant la signature numérique; et
un moyen destiné à analyser la signature numérique ajoutée (19), **caractérisé en ce que** ledit moyen destiné à analyser la signature numérique (19) détermine un taux de coïncidence (23) entre le document cible (13) et le document cible avec une signature numérique (17) à partir d'un taux d'éléments structurels ayant des signatures numériques authentifiées par rapport à la structure tout entière.
